# EUROPÄISCHE PATENTANMELDUNG

(11) **EP 0 955 723 A2**
(43) Veröffentlichungstag der Anmeldung: **10.11.1999**
(21) Anmeldenummer: 99107221.6
(22) Anmeldetag: 14.04.1999
(51) Int. Cl.: H02P 7/74, B29C 45/76

(54) **Verfahren und Vorrichtung zur Absenkung der Zwischenkreisspannung in einer elektrisch betriebenen Spritzgiessmaschine**

(30) Priorität: 04.05.1998 DE 19819809
(71) Anmelder: Battenfeld GmbH, D-58540 Meinerzhagen (DE)
(72) Erfinder: Lehner, Friedrich, Dipl.-Ing., 1222 Wien (AT); Brunbauer, Klaus, Ing., 2542 Kottingbrunn (AT); Bleier, Harald, Ing., 2700 Wiener Neustadt (AT)

(57) **Zusammenfassung**

Die Erfindung bezieht sich auf ein Verfahren und eine Vorrichtung zur Absenkung der Zwischenkreisspannung (U_{ZK}) in einer elektrisch betriebenen Spritzgießmaschine. Erfindungsgemäß ist vorgesehen, daß in den Zeitabschnitten des Spritzgießzyklus, in denen die Antriebsmotoren (2) mit einer Drehzahl (n) laufen, die unter einem vorgegebenen Wert (n_{nied}) liegen, die Zwischenkreisspannung (U_{ZK}) der Stromumrichter abgesenkt wird. Hiermit wird nicht nur eine Energieeinsparung erreicht, es wird auch eine Überlastung der elektrischen Bauteile vermieden.

## Beschreibung

Die Erfindung bezieht sich auf ein Verfahren zur Absenkung der Zwischenkreisspannung in einer elektrisch betriebenen Spritzgießmaschine. Des weiteren bezieht sich die Erfindung auf eine Vorrichtung zur Durchführung des Verfahrens.

Für das Spritzgießen von Kunststoff-Formteilen kommen neben den bekannten hydraulisch angetriebenen Maschinen auch elektrisch angetriebene Spritzgießmaschinen zum Einsatz. Bei letzteren werden sämtliche Maschinen-Bewegungen (Werkzeugöffnungs- und Schließbewegung, Einspritzbewegungen, etc.) mittels elektrischer Antriebsmotoren bewerkstelligt.

Bei vollelektrischen Maschinen werden als Antriebsaggregate also ausschließlich Elektromotoren, vorzugsweise Servomotoren, eingesetzt. Damit sind verschiedene Vorteile im Vergleich mit hydraulischen Spritzgießmaschinen verbunden. Die servoelektrischen Maschinen zeichnen sich z. B. durch niedrige Betriebsgeräusche aus und können auch unter Reinraum-Bedingungen arbeiten. Ferner gibt es keine Probleme im Bereich der Entsorgung verbrauchten Hydrauliköls.

Speziell für diffizil zu fertigende Formteile hat sich der Einsatz von elektrischen Spritzgießmaschinen gegenüber den hydraulischen Maschinen als vorteilhaft erwiesen. Diese Vorteile ergeben sich vor allem aus der guten Reproduzierbarkeit und der Regelbarkeit des Spritzvorganges. Hinzu kommt noch eine nicht unwesentliche Energieeinsparung gegenüber hydraulischen Anlagen.

Der Spritzgießvorgang gliedert sich in mehrere Phasen, wobei einige dieser Phasen simultan ablaufen: Schließen des Werkzeugs, Einspritzen von Kunststoffschmelze ins Werkzeug, Aufbau und Halten des Nachdrucks, Öffnen des Werkzeugs, Dosieren von Schmelze, Auswerfen.

Speziell die Nachdruckphase stellt eine erhebliche Belastung für die elektrischen Komponenten der Maschine dar. Da der Spritzantrieb nur noch die Schwindung des Kunststoffs während der Abkühlphase ausgleicht, laufen die Spritzmotoren nur noch mit sehr kleiner Drehzahl. Gleichzeitig muß das für den Nachdruck erforderliche Drehmoment aufgebracht werden, das den entsprechenden Druck auf die Schmelze erzeugt. Das bedingt recht hohe Ströme in den Stromumrichtern der Motoren.

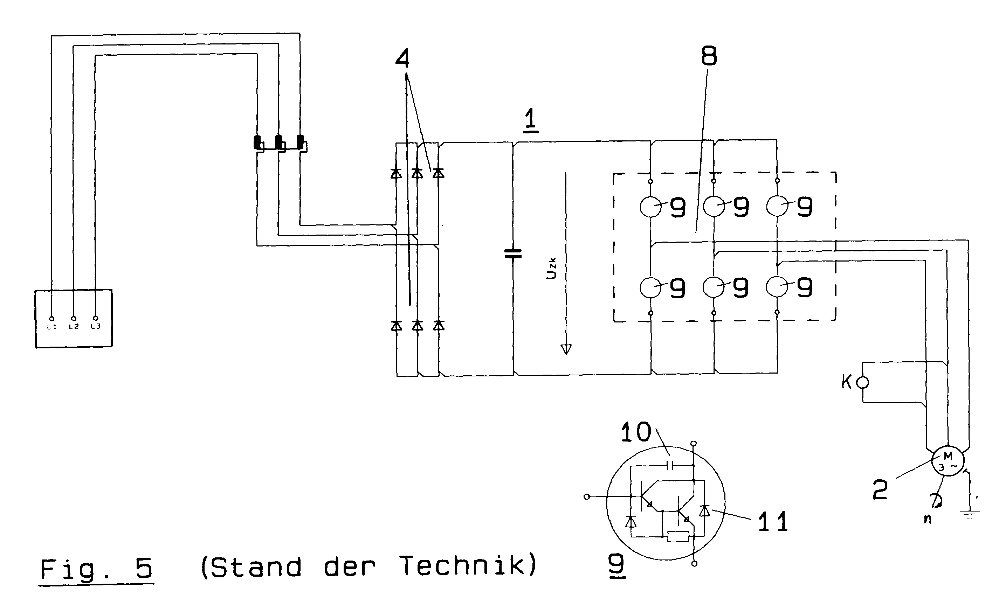

Der übliche Aufbau eines Stromumrichtersystems nach dem Stand der Technik ist in Fig. 5 zu sehen. Zu sehen ist, daß die drei Phasen des Netzes (L1, L2, L3) mit einem elektrischen Zwischenkreis 1 in Verbindung stehen, von dem ein oder mehrere Antriebsmotoren 2 gespeist werden. Der Zwischenkreis weist im linken Bereich eine Gleichrichter-Brückenschaltung 4 und im rechten Bereich die Motorbrücke 8 auf. Nach der Brücke 4 liegt die Zwischenkreisspannung U_{ZK} an. In den bisher bekannten elektrischen Spritzgießmaschinen ist die Zwischenkreisspannung so bemessen, daß bei höchster Motorendrehzahl genügend Ausgangsspannung zur Verfügung steht.

Die Stromumrichter werden durch die geringen Drehzahlen beim Aufbringen des Nachdrucks in zweierlei Weise extrem belastet: Einerseits entfällt durch die geringe Drehzahl die Lastaufteilung auf alle Brückentransistoren 9 der Motorbrücke 8, von denen im gezeigten Falle sechs Stück vorgesehen sind. Andererseits werden durch die geringe elektromotorische Kraft K, die an den Klemmen des Motors 2 im Leerlauf der Maschine gemessen wird, die Freilaufdioden 11, die sich in der Brücke 8 befinden, überdurchschnittlich belastet; das führt zu einer entsprechenden Temperaturerhöhung. Eine große Anzahl solcher thermischer Zyklen führt dann schließlich zu einer Alterung der Bondierung (Verbindung des Siliziumchips mit dem Kontaktblech) der elektrischen Bauteile und in der Folge zu deren Bruch.

Wie in Fig. 5 im Detail zu sehen ist, besteht jedes Brückenelement 9 (Brückentransistor) aus einer Darlington-Schaltung (die vergrößert dargestellt ist), bei der auch eine parasitäre Millerkapazität 10 systemimmanent ist.

Der Erfindung liegt die **Aufgabe** zugrunde, ein Verfahren und eine zugehörige Vorrichtung zu schaffen, mit dem bzw. der eine Absenkung der Zwischenkreisspannung im elektrischen Zwischenkreis einer elektrisch betriebenen Spritzgießmaschine erfolgen kann, um einerseits den Energieverbrauch der Maschine zu reduzieren und andererseits die Belastung der elektrischen Bauelemente herabzusetzen.

Die **Lösung** der Aufgabe durch die Erfindung ist dadurch gekennzeichnet, daß in den Zeitabschnitten des Spritzgießzyklus, in denen die Antriebsmotoren (2) mit einer Drehzahl (n) laufen, die unter einem vorgegebenen Wert (n_{nied}) liegen, die Zwischenkreisspannung (U_{ZK}) der Stromumrichter abgesenkt wird.

Hierbei ist insbesondere vorgesehen, daß die Zwischenkreisspannung (U_{ZK}) der Stromumrichter dadurch abgesenkt wird, daß ein geeignetes Schaltsignal oder ein geeigneter Sollwert von der Maschinensteuerung (3) an die Einspeisung des Zwischenkreises (1) abgegeben wird.

In vorteilhafter Weise wird also durch die gezielte und gesteuerte Herabsetzung der Zwischenkreisspannung erreicht, daß der Stromumrichter in den hoch beanspruchenden Phasen des Spritzzyklus, in denen die Motorendrehzahl gering ist, nur einer geringeren Belastung ausgesetzt ist und die Lebensdauer der elektrischen Bauteile daher erhöht wird. Durch das Absenken der Zwischenkreisspannung werden die Schaltverluste proportional geringer, die ohne Absenkung der Spannung erheblich sein können. Darüber hinaus verkürzen sich sie Schaltzeiten durch Absinken der parasitären Millerkapazität, was zu einer weiteren Verminderung der Verlustleistung führt. Ferner gelangt der Transistor durch das Absenken der Zwischenkreisspannung auch weiter in das Zentrum der 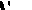 Safe Operating Area" (S.O.A.), was zu einer gesteigerten Ausfallsicherheit führt. Die Verlustleistung in den Umrichtern wird durch die Absenkung der Zwischenkreisspannung natürlich ebenfalls vermindert.

Normalerweise verschiebt sich durch den Betrieb bei kleinen Motordrehzahlen die Pulsweitenmodulation (PWM) in Richtung 50 %, was zu einer gesteigerten Belastung der Freilaufdioden führt; das wiederum führt zu einer gesteigerten Belastung der Freilaufdioden (die Pulsweitenmodulation ist eine Modulationsmethode, mit deren Hilfe sinusförmige Spannungsverläufe nachgebildet werden können, obwohl sich die Transistoren ausschließlich im Schaltbetrieb befinden). Auch hierdurch wird die Bondierung durch thermische Zyklen belastet. Das erfindungsgemäße Herabsetzen der Zwischenkreisspannung wirkt jedoch der Pulsweitenmodulations-Verschiebung entgegen.

Das Absenken der Zwischenkreisspannung in dem oder den Umrichtern wird durch die Steuerung der Spritzgießmaschine vorgenommen. Diese kennt aufgrund des abgespeicherten Spritzgießzyklus genau die Phasen des Zyklus, in denen die Motoren mit der geringen Drehzahl (mit einer Drehzahl unter einem vorgegebenen und abgespeicherten Wert) laufen und kann daher gezielt zur gegebenen Zeit ein entsprechendes Signal an den Zwischenkreis geben.

Fortbildungsgemäß ist vorgesehen, daß das Schaltsignal, das von der Maschinensteuerung (3) an die Einspeisung des Zwischenkreises (1) abgegeben wird, ein Ein-Aus-Schaltsignal an eine Gleichrichter-Brückenschaltung (4) des Zwischenkreises (1) ist.

Alternativ ist angedacht, daß der Sollwert, der von der Maschinensteuerung (3) an die Einspeisung des Zwischenkreises (1) gegeben wird, ein Spannungssollwert (U_{Soll}) ist, der an einen Spannungsregler (5) gegeben wird, der über eine Thyristorschaltung (6) die Absenkung der Zwischenkreisspannung (U_{ZK}) auf den gewünschten Wert (Uₛₒₗₗ) bewirkt.

Die Vorrichtung zur Absenkung der Zwischenkreisspannung (U_{ZK}) in einer elektrisch betriebenen Spritzgießmaschine ist gekennzeichnet durch einen elektromechanischen oder elektronischen Schalter (7), der von der Maschinensteuerung (3) betätigt wird, der mit einer Gleichrichter-Brückenschaltung (4) in Verbindung steht und diese ein- und ausschaltet.

Alternativ dazu kann die Vorrichtung auch gekennzeichnet sein durch einen Spannungsregler (5), der von der Maschinensteuerung (3) betätigt wird und der mit einer Thyristorschaltung (6) in Verbindung steht, die die Absenkung der Zwischenkreisspannung (U_{ZK}) auf einen vorgegebenen Wert (Uₛₒₗₗ) veranlaßt.

In der Zeichnung sind Ausführungsbeispiele der Erfindung dargestellt.
- Fig. 1: zeigt eine Zwischenkreisschaltung mit einem Schaltelement für das Herabsetzen der Zwischenkreisspannung,
- Fig. 2: zeigt eine zu Fig. 1 alternative Ausgestaltung, in
- Fig. 3: ist ein Zwischenkreis mit einer Thyristorschaltung zu sehen,
- Fig. 4: zeigt eine Alternative zu Fig. 3, in
- Fig. 5: ist ein Schaltbild gemäß dem Stand der Technik zu sehen.

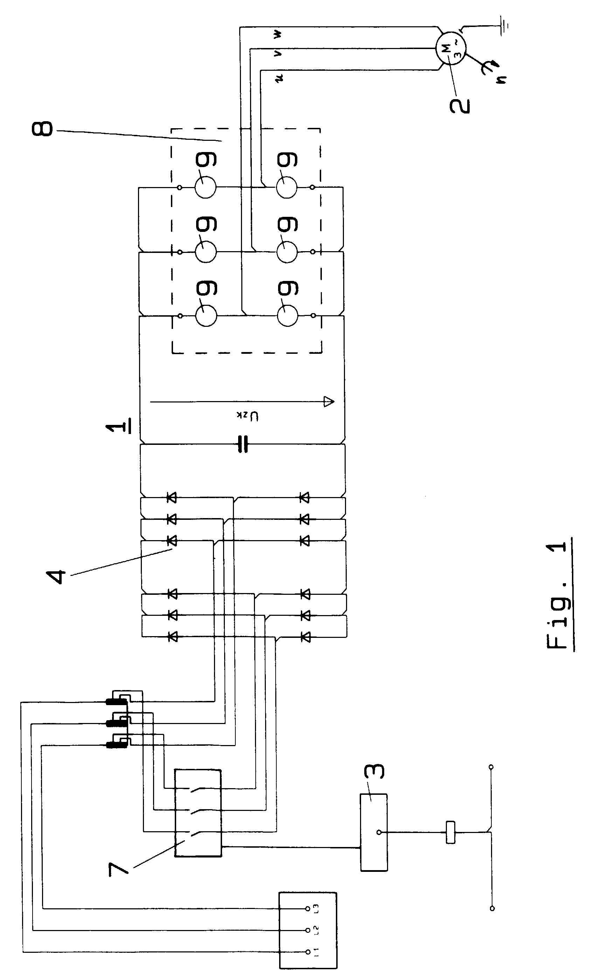

In Fig. 1 ist der schematische Aufbau eines Zwischenkreises 1 zu sehen. Dem Zwischenkreis wird durch das Netz (Phasen L1, L2, L3) Energie zugeführt. Es besteht eine Verbindung zwischen dem Netz und der Gleichrichter-Brückenschaltung 4. Die Schaltung 4 besteht im gezeigten Falle aus insgesamt 12 Dioden. Nach der Schaltung 4 liegt die Zwischenkreisspannung U_{ZK} an. Diese liegt auch an der Motorbrücke 8 an, die sechs Brückentransistoren 9 aufweist. Dort werden die drei Phasen U, V, W für den Antrieb des Motors 2 abgegriffen, der sich mit einer Drehzahl n dreht.

Erfindungsgemäß ist vorgesehen, daß die Maschinensteuerung 3 über eine Signalleitung mit einem Schalter 7 in Verbindung steht. Die Steuerung kann den Schalter 7 zum Schalten veranlassen. Der Schalter 7 unterbricht im Schaltfalle drei Verbindungen zwischen dem Netz und den Dioden der Gleichrichter-Brückenschaltung 4, so daß - wie dem Fachmann sofort ersichtlich ist - eine Beeinflussung (Herabsetzung) der Zwischenkreisspannung ergibt, sobald der Schalter 7 betätigt wird: Durch den Schalter 7 wird der 'linke' Gleichrichter (bestehend aus den linken sechs Dioden) abgeschaltet. D. h. der Einspeisetransformator wird angezapft, und die reduzierte Spannung wird über einen eigenen Gleichrichter dem Zwischenkreis zugeführt.

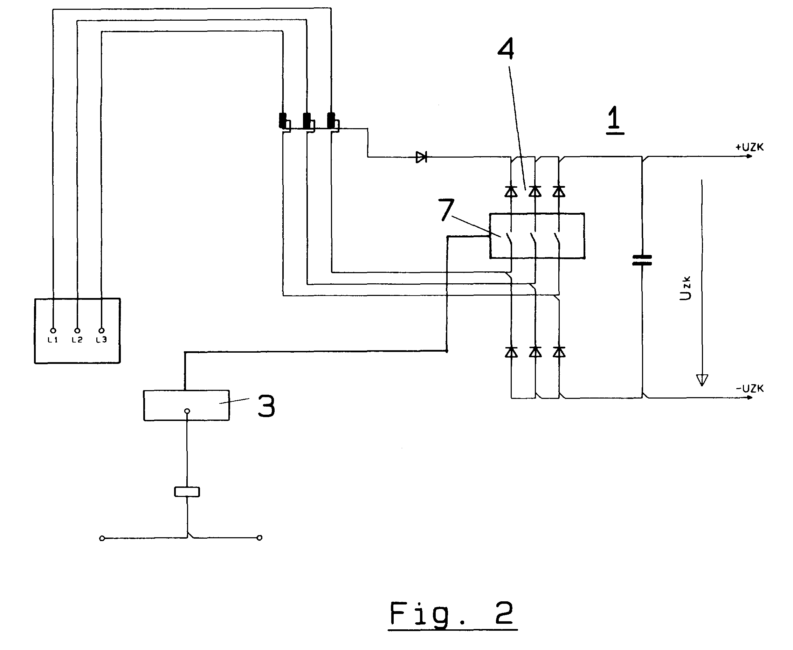

In ähnlicher Weise erfolgt die Reduzierung der Zwischenkreisspannung in der Schaltung gemäß Fig. 2, wobei die Gleichrichter-Brückschaltung jedoch insgesamt nur sieben Dioden aufweist. Hier handelt es sich um eine schaltungstechnisch einfachere Ausführung für die Spannungsabsenkung: Der Mittelpunkt des Drei-Phasensystems wird gesondert ausgeführt und über eine Diode in den Zwischenkreis eingespeist. Das kann besonders dann vorteilhaft sein, wenn kein Einspeisetransformator zur Verfügung steht, den man anzapfen könnte, jedoch ein Nulleiter.

Der Schalter kann als elektromechanischer Schalter ausgeführt sein. Bevorzugt wird er jedoch als Halbleiterschalter ausgeführt.

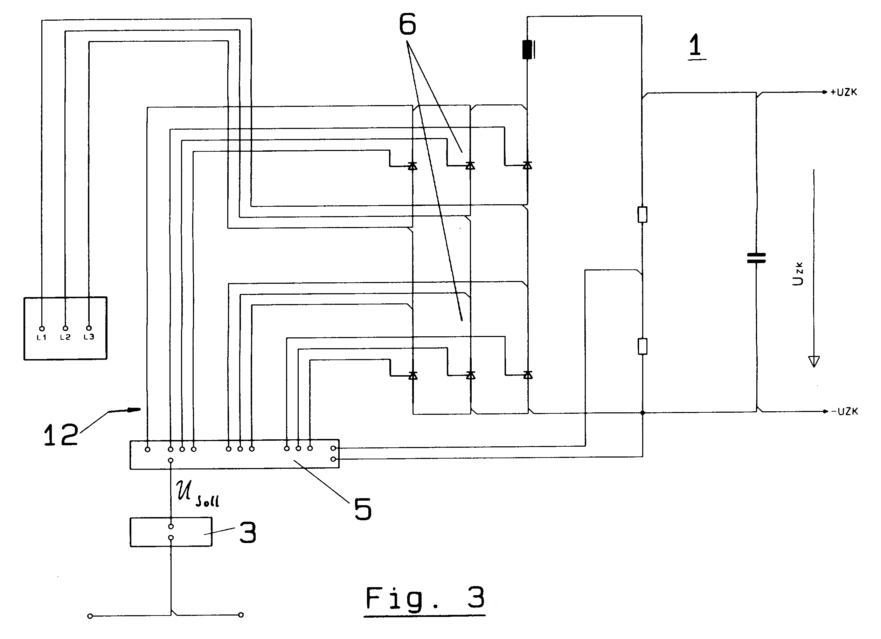

In der Ausgestalung nach Fig. 3 steuert die Maschinensteuerung 3 einen Spannungsregler 5 an. Dabei wir dem Regler 5 von der Steuerung 3 ein Sollwert für die Zwischenkreisspannung Uₛₒₗₗ vorgegeben. Der Spannungsregler erzeugt Zündimpule 12, die auf Thyristoren einer Thyristorschaltung 6 wirken. Auf diese Art und Weise wird die Zwischenkreisspannung U_{ZK} auf einen von der Steuerung 3 vorgegebenen Wert geregelt.

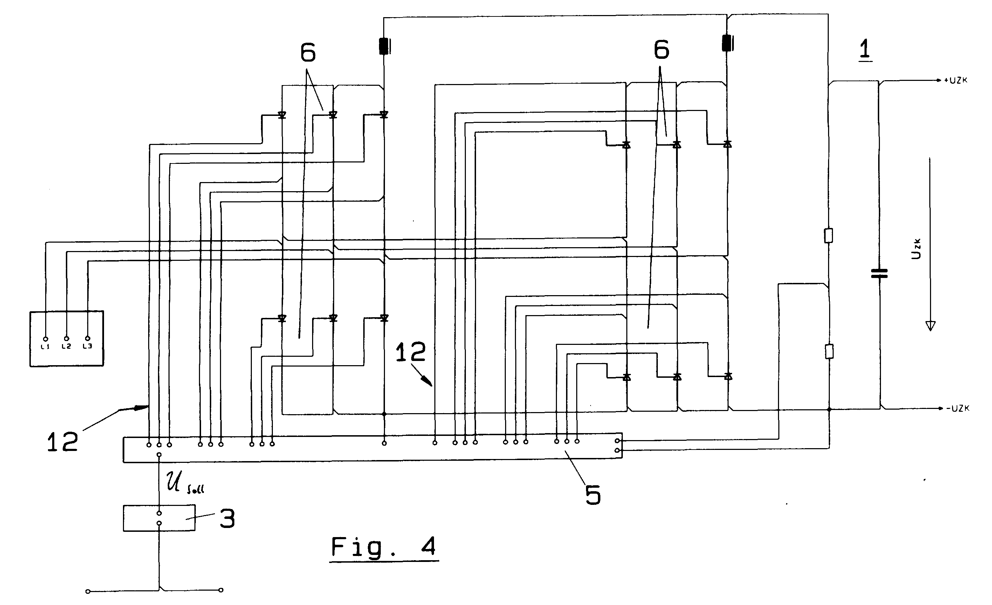

Fig. 4 zeigt eine etwas modifizierte Schaltung, bei der insgesamt zwölf Thyristoren vorgesehen sind, die von dem Spannungsregler 5 angesteuert werden. Im Falle von Fig. 5 ist sogar eine Rückspeisung möglich, was angesichts regenerativer Bremsenergie der Schließeinheit interessant sein kann.

In beiden Ausführungsformen (Fig. 3 und Fig. 4) ist also der Hauptgleichrichter als Thyristorsatz ausgeführt, der über das Signal von der Steuerung entsprechend gezündet wird.

Die Steuerung 3 gibt - sowohl an den Schalter 7 als auch an den Spannungsregler 5 - ihr jeweiliges Signal aus, sobald die programmgemäß vorgesehene oder gemessene Drehzahl n des Motors 2 unter eine vorgegebene und eingestellte (gespeicherte) Grenze n_{nied} fällt. Die hierfür notwendigen Vorkehrungen sind dem Fachmann geläufig und sollen hier nicht detailliert erläutert werden.

Die Steuerung 3 bietet dem Servosystem also beispielsweise unmittelbar nach dem Einleiten des Nachdruckvorganges (Phase mit extrem geringer Drehzahl) ein Signal an, demzufolge das Einspeiseteil des Servosystems selbständig die Zwischenkreisspannung absenkt. Unmittelbar nach dem Abschluß der Nachdruckphase nimmt die Steuerung dieses Signal wieder zurück. Auf diese Weise wird unnötiger Leistungsbedarf während der Nachdruckphase vermieden.

### Bezugszeichenliste:

- 1: elektrischer Zwischenkreis
- 2: Antriebsmotor
- 3: Maschinensteuerung
- 4: Gleichrichter-Brückenschaltung
- 5: Spannungsregler
- 6: Thyristorschaltung
- 7: elektromechanischen oder elektronischen Schalter
- 8: Motorbrücke
- 9: Brückenelemente (Brückentransistoren)
- 10: Millerkapazität
- 11: Freilaufdiode
- 12: Zündimpulse für die Thyristoren
- U_{ZK}: Zwischenkreisspannung
- n: Drehzahl des Antriebsmotors 2
- n_{nied}: vorgegebene, niedrige Drehzahl des Antriebsmotors 2
- Uₛₒₗₗ: Sollwert-Spannung für den Zwischenkreis 1
- K: an den Klemmen des Motors im Leerlauf der der Maschine meßbare elektromotorische Kraft
- U, V, W: Phasen des Motors 2

## Patentansprüche

1. Verfahren zur Absenkung der Zwischenkreisspannung (U_{ZK}) in einer elektrisch betriebenen Spritzgießmaschine,
**dadurch gekennzeichnet, daß**
in den Zeitabschnitten des Spritzgießzyklus, in denen die Antriebsmotoren (2) mit einer Drehzahl (n) laufen, die unter einem vorgegebenen Wert (n_{nied}) liegen, die Zwischenkreisspannung (U_{ZK}) der Stromumrichter abgesenkt wird.

2. Verfahren nach Anspruch 1, dadurch gekennzeichnet, daß die Zwischenkreisspannung (U_{ZK}) der Stromumrichter dadurch abgesenkt wird, daß ein geeignetes Schaltsignal oder ein geeigneter Sollwert von der Maschinensteuerung (3) an die Einspeisung des Zwischenkreises (1) abgegeben wird.

3. Verfahren nach Anspruch 2, dadurch gekennzeichnet, daß das Schaltsignal, das von der Maschinensteuerung (3) an die Einspeisung des Zwischenkreises (1) abgegeben wird, ein Ein-Aus-Schaltsignal an eine Gleichrichter-Brückenschaltung (4) des Zwischenkreises (1) ist.

4. Verfahren nach Anspruch 2, dadurch gekennzeichnet, daß der Sollwert, der von der Maschinensteuerung (3) an die Einspeisung des Zwischenkreises (1) gegeben wird, ein Spannungssollwert (U_{Soll}) ist, der an einen Spannungsregler (5) gegeben wird, der über eine Thyristorschaltung (6) die Absenkung der Zwischenkreisspannung (U_{ZK}) auf den gewünschten Wert (Uₛₒₗₗ) bewirkt.

5. Vorrichtung zur Absenkung der Zwischenkreisspannung (U_{ZK}) in einer elektrisch betriebenen Spritzgießmaschine,
**gekennzeichnet durch**
einen elektromechanischen oder elektronischen Schalter (7), der von der Maschinensteuerung (3) betätigt wird, der mit einer (Gleichrichter-Brückenschaltung (4) in Verbindung steht und diese ein- und ausschaltet.

6. Vorrichtung zur Absenkung der Zwischenkreisspannung (U_{ZK}) in einer elektrisch betriebenen Spritzgießmaschine,
**gekennzeichnet durch**
einen Spannungsregler (5), der von der Maschinensteuerung (3) betätigt wird und der mit einer Thyristorschaltung (6) in Verbindung steht, die die Absenkung der Zwischenkreisspannung (U_{ZK}) auf einen vorgegebenen Wert (Uₛₒₗₗ) veranlaßt.
